# EUROPEAN PATENT SPECIFICATION

(11) **EP 3 450 292 B1**
(45) Date of publication and mention of the grant of the patent: **30.10.2019**
(21) Application number: 18181452.6
(22) Date of filing: 03.07.2018
(51) Int. Cl.: B62K 11/04, B62K 25/28

(54) **MOTORCYCLE**
MOTORRAD
MOTOCYCLETTE

(30) Priority: 04.09.2017 JP 2017169224
(43) Date of publication of application: 06.03.2019
(73) Proprietor: Kawasaki Jukogyo Kabushiki Kaisha, Kobe-shi, Hyogo 650-8670 (JP)
(72) Inventor: Ueno, Shusei, Kobe-shi, Hyogo 6508670 (JP)
(74) Representative: Qip Patentanwälte Dr. Kuehn & Partner mbB

(56) References cited:
- EP-A1- 2 824 023
- EP-A2- 1 081 036
- ES-A1- 2 215 430
- JP-A- 2011 201 534
- US-A1- 2016 090 140

## Description

### TECHNICAL FIELD

The present invention mainly relates to a layout of an ECU and a battery of a motorcycle.

### BACKGROUND ART

A motorcycle includes an ECU for controlling an engine and a battery for supplying the power to electrical components such as the ECU. In general, the electrical components such as the ECU and the battery or the like are arranged below a fuel tank or a seat.

Patent Document 1 (Japanese Examined Utility Model Application Publication No. 1995-38061) discloses the motorcycle in which the battery is arranged below a boundary section of the fuel tank and the seat. Patent Document 1 does not describe the ECU and its arrangement.

The ECU generally having a cuboid shape is arranged so that its surface with the largest area faces to a vertical direction. Accordingly, the ECU is likely to have a large left-right width. Therefore, in general, the ECU and the battery are arranged side by side in a front-back direction, or they are arranged in a different place spaced from each other.

Patent Document 2 (JP 2011 201534 A) discloses an electrical equipment disposing structure of a motorcycle according to the preamble of claim 1.

### SUMMARY OF THE INVENTION

### PROBLEMS TO BE SOLVED BY THE INVENTION

Here, since the motorcycle has a smaller space in comparison with, for example, automobiles etc., it is desirable to efficiently arrange the electrical components and other devices. In this regard, Patent Document 1 does not disclose a layout including a positional relationship between the battery and the ECU.

The present invention has been made in view of the circumstances described above, its primary object is to provide a motorcycle in which a space for arranging other devices is secured by efficiently arranging an ECU and a battery.

### MEANS FOR SOLVING THE PROBLEMS

Problems to be solved by the present invention are as described above, and next, means for solving the problems and effects thereof will be described.

In an aspect of the present invention, a motorcycle with the following configuration is provided. That is, the motorcycle includes a fuel tank, a seat, a step, a front wheel and a rear wheel, a vehicle body frame, an ECU, and a battery. The seat is a member for being sat by a driver. The step is a member on which the driver puts one's own foot. The vehicle body frame has a configuration including a main frame and a rear frame which are connected in a front-back direction. The vehicle body frame has a shape extending in the front-back direction. The ECU that is supported by the vehicle body frame controls an engine. The battery is supported by the vehicle body frame. The ECU and the battery are arranged side by side in a vehicle width direction. Both of the ECU and the battery have a cuboid shape, and each of their short sides as the shortest side is arranged along the vehicle width direction. In a side view, the ECU and the battery are arranged such that each of long sides as the longest side is closer to the front-back direction than a vertical direction. The long side of the ECU is inclinedly arranged so as to approach upward as approaching the front, a connector is arranged in the lower long side of the ECU in the side view, and an ECU harness that is connected to the connector extends forward. A lower end of at least one connector which connects the ECU and the ECU harness is arranged at a position lower than an upper end of the front wheel and the upper end of the rear wheel.

Accordingly, each short side of the ECU and the battery is arranged along the vehicle width direction and supported by the vehicle body frame, and thereby the ECU and the battery can be arranged in the vehicle width direction while suppressing the size in the vehicle width direction. As a result, a relatively large space is easily secured in front of or rear of the ECU and the battery in the vehicle body frame can be provided.

### EFFECT OF THE INVENTION

According to the present invention, the ECU and battery are efficiently arranged, and thereby a motorcycle securing a wide space for arranging other devices.

### BRIEF DESCRIPTION OF THE DRAWINGS

[Fig. 1] A side view of a motorcycle according to one embodiment of the present invention.
[Fig. 2] A plan view of the motorcycle.
[Fig. 3] A partial cross-sectional view of a place where an ECU is arranged is cut in a plane perpendicular to a vehicle width direction.
[Fig. 4] A partial cross-sectional view of a place where a battery is arranged is cut in a plane perpendicular to the vehicle width direction.
[Fig. 5] A plan view of a state in which a front seat and a rear seat are removed.

### EMBODIMENT FOR CARRYING OUT THE INVENTION

Next, an embodiment of the present invention will be described with reference to the drawings. In the following description, front-back and left-right directions are defined that a forwarding direction of a motorcycle 1 is a front direction (that is, the left-right direction is defined in the direction seen from a driver who got on the motorcycle 1). Therefore, the front-back direction corresponds to a vehicle length direction, and the left-right direction corresponds to a vehicle width direction. An upper side and a lower side in a vertical direction are defined as the upper side and the lower side. The terms describing a positional relationship, size, or shape etc. include not only a state in which the meaning of the term is completely satisfied but also a state in which the meaning of the term is substantially satisfied. When it is described that A is mounted to (supported by) B, its configuration includes not only a configuration in which A is directly mounted to (supported by) B but also the configuration in which A is mounted to (supported by) B through another mounting member or the like.

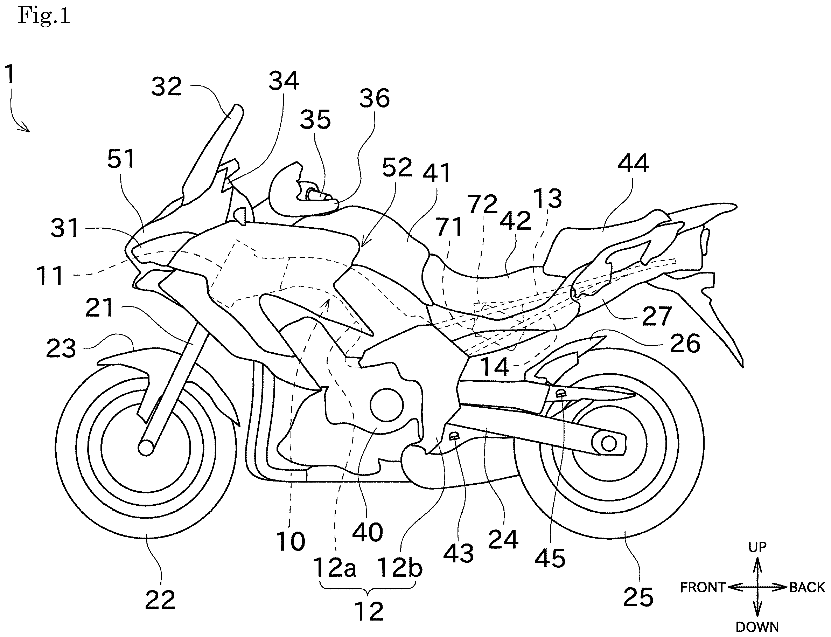

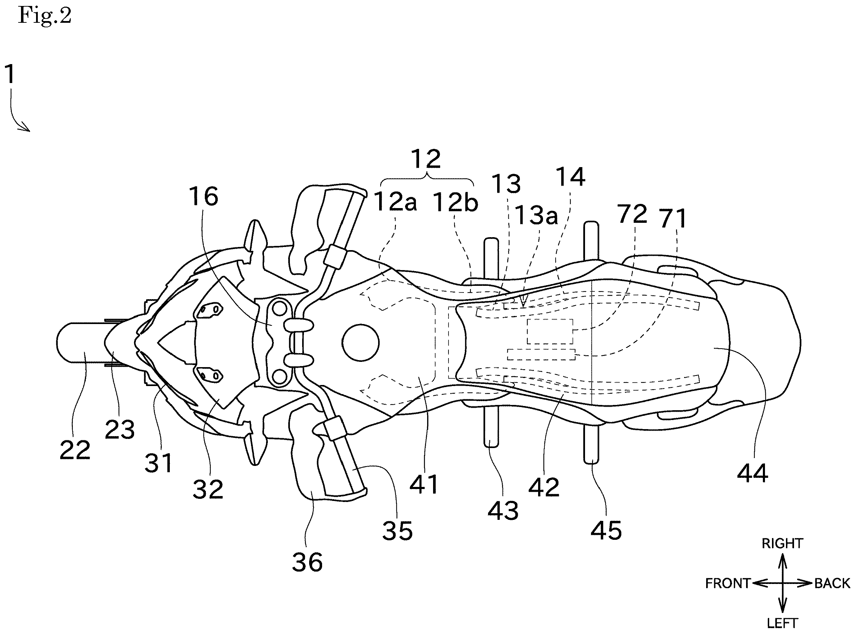

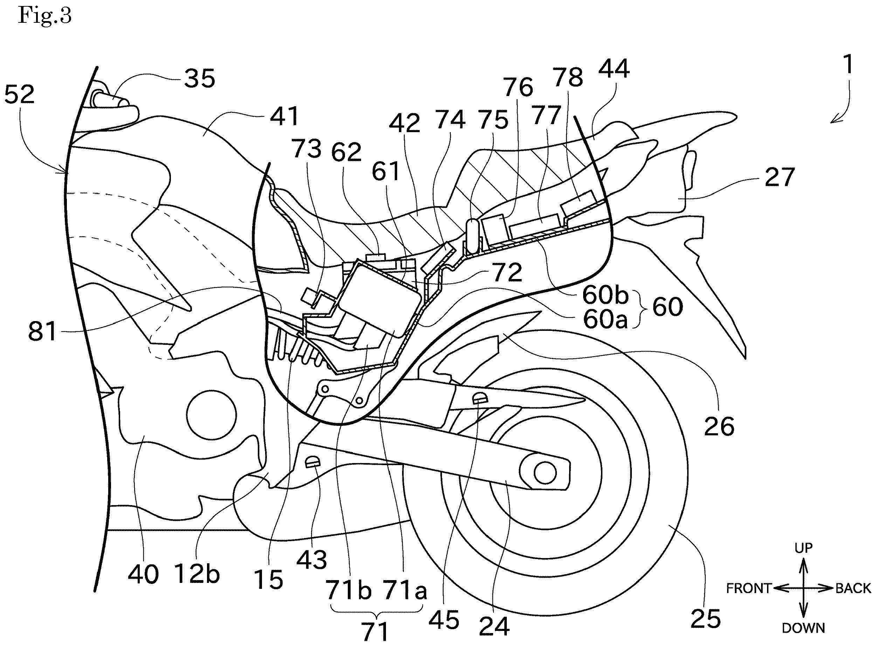

<An overall structure of the motorcycle 1> Firstly, an overview of the motorcycle 1 will be described with reference to Fig. 1 and Fig. 3. Fig. 1 is a side view of the motorcycle 1. Fig. 2 is a plan view of the motorcycle 1. As shown in Fig. 1, the motorcycle 1 includes an engine 40, a front wheel 22, and a rear wheel 25. These members are supported by a vehicle body frame 10. The vehicle body frame 10 includes a head pipe frame 11, a main frame 12, a rear frame 13, and a rear stay 14.

The head pipe frame 11 has a shaft insertion hole for receiving a steering shaft (not shown). An upper bracket 16 shown in Fig. 2 and a lower bracket (not shown) are mounted to an upper part and a lower part of the head pipe frame 11 respectively. Each of the upper bracket 16 and the lower bracket has a fork insertion hole for receiving a front fork 21 arranged in pairs on the left and right. With this configuration, the upper bracket and the lower bracket support the front fork 21. A front wheel 22 is rotatably mounted to the lower part of the front fork 21. A front fender 23 is arranged in the upper part of the front wheel 22.

The main frame 12 extending in the front-back direction is connected to the head pipe frame 11. The main frame 12 is arranged in pairs on the left and right. The main frame 12 includes a front main frame 12a that extends rearward from a rear part of the head pipe frame 11 (specifically, extends diagonally rear-downward) and a rear main frame 12b that extends downward from the main frame 12a. The front main frame 12a and the rear main frame 12b may be formed by different members. The rear frame 13 and the rear stay 14 in pairs on the left and right are respectively mounted at a rear end of the front main frame 12a of the main frame 12. The rear frame 13 is arranged above the rear stay 14.

The rear frame 13 and the rear stay 14 are arranged so as to extend rearward from the main frame 12 (specifically, diagonally rear-upward). The rear frame 13 has a narrow part 13a where a space between the left and right is narrowed. In a portion where the narrow part 13a is formed, in a plan view, the rear frame 13 overlaps the rear stay 14, or the rear frame 13 is positioned inside the rear stay 14. On the other hand, in the rear of the narrow part 13a, in the plan view, the rear frame 13 overlaps the rear stay 14, or the rear frame 13 is positioned outside the rear stay 14.

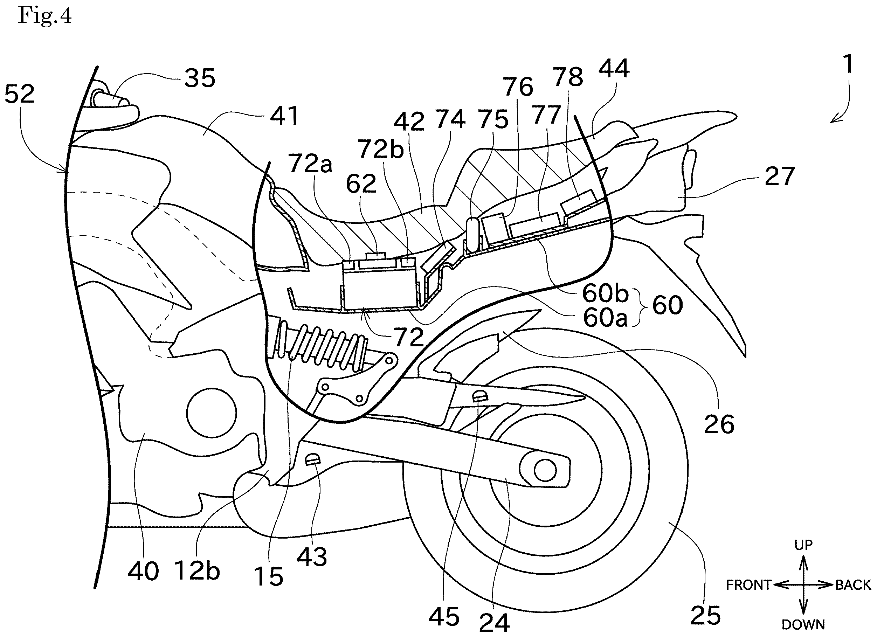

A swing arm 24 is mounted to the rear main frame 12b of the main frame 12. A front end of the swing arm 24 is elastically supported by a rear suspension 15 shown in Fig. 3 and Fig. 4 which will be described later. The swing arm 24 is arranged so as to extend rearward as shown in Fig. 1. A rear wheel 25 is rotatably mounted to a rear part of the swing arm 24. The power that is generated in the engine 40 is transmitted to the rear wheel 25 via a drive chain (not shown). A rear fender 26 is arranged in the upper part of the rear wheel 25 (near the rear wheel 25). As with the swing arm 24, the rear fender 26 is elastically supported by the rear suspension 15. When the swing arm 24 and the rear wheel 25 swing, the rear fender 26 swings integrally therewith.

A rear frame cover 27 is arranged above the rear wheel 25 and below a rear seat 44 which will be described later. The rear frame cover 27 covers the rear frame 13 and the rear stay 14 (particularly their rear part). The rear frame cover 27 is supported by the vehicle body frame 10 (the rear frame 13, the rear stay 14). Even when the swing arm 24 and the rear wheel 25 swing, the rear frame cover 27 does not swing integrally therewith.

As shown in Fig. 1, a headlight 31 is arranged above the front wheel 22 and in a front part of the motorcycle 1. The headlight 31 is arranged in pairs on the left and right, and illuminates the front of the motorcycle 1.

A wind shield 32 is arranged above the rear part of the headlight 31. The wind shield 32 guides a running wind, and thereby the running wind is reduced for the driver. Therefore, the wind shield 32 is arranged so as to extend diagonally rear-upward from a lower end (proximal end).

A meter device 34 capable of displaying a vehicle speed, an engine speed, a warning information, etc. is arranged rearward of the wind shield 32. A steering handle 35 is arranged further rearward of the meter device 34. The steering handle 35 is rotated by the driver, which makes the front fork 21 to be rotated. Thereby, the motorcycle 1 can be rotated. A handle cover 36 for covering the steering handle 35 is arranged at least forward of the steering handle 35.

A fuel tank 41 for storing fuel to be supplied to the engine 40 is arranged rearward of the steering handle 35 and above the engine 40. A front seat 42 for being sat by the driver is arranged rearward of the fuel tank 41. A front step 43 for placing foot of the driver who sits on the front seat 42 is arranged below the front seat 42. The driver sits on the front seat 42, sandwiches the fuel tank 41 and its lower part with one's own foot, and puts one's own foot on the front step 43. Thereby, steering is partly performed by moving the center of gravity from side to side, while stabilizing the driver's body.

A rear seat 44 for being sat by a passenger is arranged rearward of the front seat 42. The rear seat 44 is arranged above the above-described rear frame cover 27. A rear step 45 is arranged below the rear seat 44 and above the swing arm 24. The passenger sits on the rear seat 44 and puts one's foot on the rear step 45, which can stabilize the passenger's body.

The motorcycle 1 includes a front cowl 51 and a side cowl 52, as shown in Fig. 1. The front cowl 51 is arranged mainly in a front part of the vehicle body, specifically around the headlight 31 and in a part for covering the proximal end etc. of the wind shield 32. The side cowl 52 is arranged mainly on a side of the vehicle body, specifically below the steering wheel 35 and below the fuel tank 41 etc., as shown in Fig. 1.

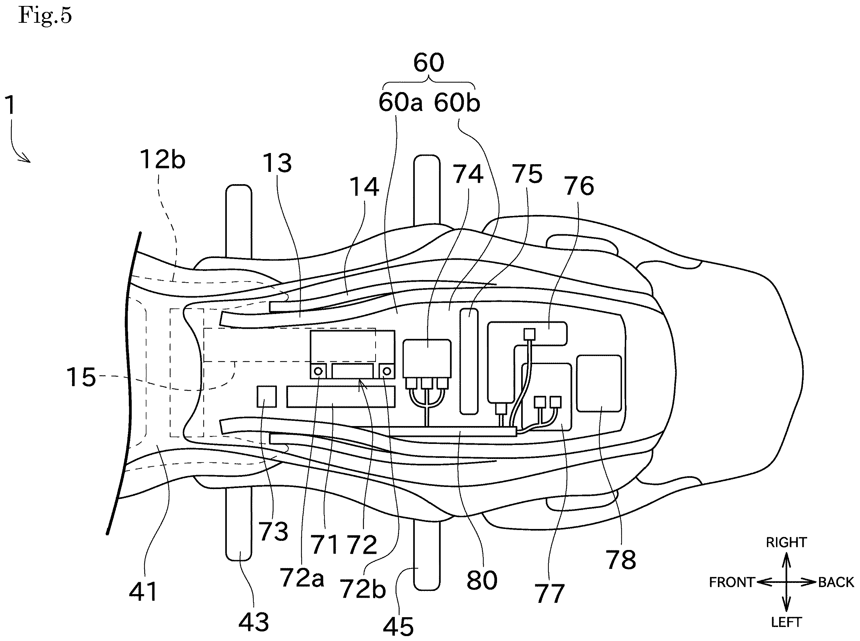

<A configuration under the seat> Next, a layout of the devices (in particular, the ECU 71 and the battery 72) which are arranged under the seat will be described with reference to Fig. 3 to Fig. 5. Fig. 3 is a partial cross-sectional view of a place where the ECU 71 is arranged is cut in a plane perpendicular to a left-right direction. Fig. 4 is a partial cross-sectional view of a place where the battery 72 is arranged is cut in the plane perpendicular to the left-right direction. Fig. 5 is a plan view of a state in which the front seat 42 and the rear seat 44 are removed.

A storage casing 60 is arranged below the front seat 42 and the rear seat 44, as shown in Fig. 3 to Fig. 5. The storage casing 60 is mounted to the rear frame 13 and the rear stay 14. The storage casing 60 is arranged between the rear frame 13 in pairs on the left and right, and arranged in a space including between the rear stay 14 in pairs on the left and right. The storage casing 60 has a bottom surface for arranging various devices or brackets etc. for mounting such devices.

The storage casing 60 includes a front storage portion 60a and a rear storage portion 60b on a rear side of the front storage portion 60a. In this embodiment, although the front storage portion 60a and the rear storage portion 60b are integrally formed as a single member, they may be separate member from each other. The front storage portion 60a is a portion positioned below the front seat 42. The rear storage portion 60b is a portion positioned below the rear seat 44, and positioned inside the rear frame cover 27. Since the front seat 42 is positioned below the rear seat 44, the front storage portion 60a is also positioned below the rear storage portion 60b. Since the rear frame cover 27 swings in the vertical direction with respect to the rear wheel 25 and the like, it is necessary to arrange the rear frame cover 27 and the rear wheel 25 with a space for a predetermined distance or more. For this reason, a vertical size of the rear frame cover 27 is likely to be small. Therefore, the vertical size of the rear storage portion 60b is also small (as compared with the front storage portion 60a).

<Devices which are arranged in the front storage portion 60a> The front storage portion 60a of the storage casing 60 has the ECU 71, the battery 72, a magnetic switch 73, and a relay box 74.

The ECU (engine control unit) 71 is configured by a control unit and the like that controls the engine 40 (for example, the above-described fuel injection control and ignition timing adjustment control, etc.), and the like. The ECU 71 has a body part 71a including a board and a housing for housing the board, and a connector 71b for which an ECU harness 81 is mounted to the body part 71a. A lower end of the connector 71b is arranged at a lower position of an upper end of the front wheel 22 and the upper end of the rear wheel 25. The ECU 71 is mounted to the storage casing 60 by a rubber member (not shown) and the mounting bracket 61.

The battery 72 stores the power generated by a generator (alternator) provided integrally with the engine 40. The battery 72 has a positive terminal (plus terminal) 72a and a negative terminal (minus terminal) 72b. The battery 72 is arranged such that the positive terminal 72a and the negative terminal 72b are aligned in the front-back direction and the positive terminal 72a is arranged in front of the negative terminal 72b. Alternately, the battery 72 may be arranged such that the positive terminal 72a is arranged rearward of the negative terminal 72b. An electrical component (for example, the magnetic switch 73) is connected to the positive terminal 72a. The negative terminal 72b is connected to the vehicle body frame 10, etc.

A battery holding part 62 is arranged below the front seat 42. The battery holding part 62 is a rubber damper or the like which can be elastically deformed. The battery holding part 62 is arranged at a position in contact with an upper surface of the battery 72 when the front seat 42 is attached. In such configuration, movement of the battery 72 can be restricted merely by attaching the front seat 42. As compared with a case where the position of the battery 72 is fixed by using a rubber band or the like, there is no need to have a part for hooking the rubber band or the like, by using the method of this embodiment. As shown in Fig. 4, the position of the battery 72 is also restricted by a wall portion extending upward from the storage casing 60. Fig. 4 shows the wall portion for restricting a positional displacement of the battery 72 in the front-back direction. Similar wall portion that is formed in the battery 72 in the vehicle width direction restricts the positional displacement in the vehicle width direction.

The magnetic switch 73 is a relay (that is, a starter relay) that supplies power to a starter motor for starting the engine 40. The relay box 74 is a housing that houses the plurality of relays. The magnetic switch 73 is mounted to the above-described mounting bracket 61 for which the ECU 71 is mounted to the storage casing 60.

Here, in order to remove the ECU 71 from the storage casing 60, it is necessary to remove the magnetic switch 73 and the fuel tank 41. Specifically, the mounting bracket 61 is mounted to the storage casing 60 by using a fixture (not shown) below the magnetic switch 73. Therefore, it is necessary to remove the magnetic switch 73 in order to secure a space for removing the fixture by using a tool. Furthermore, a rear end of the fuel tank 41 is positioned above the magnetic switch 73. Therefore, it is necessary to remove the fuel tank 41 in order to remove the magnetic switch 73 and in order to secure the space for removing the fixture. As described above, in this embodiment, the ECU 71 cannot be removed in a short time, which can prevent theft of the ECU 71 or theft of the motorcycle 1 by accessing the ECU 71 to release an electronic lock.

As shown in Fig. 5, a harness is connected to the relay box 74. The harness is connected to a main harness (a large diameter harness group that is formed by a bundle of the plurality of harnesses) 80 that passes through the left side of the center in the vehicle width direction. The main harness 80 may be configured to pass through the right side of the center in the vehicle width direction. The ECU 71 and the main harness 80 are connected by the plurality of harnesses (not shown). Therefore, the ECU 71 and the harness 80 are arranged on the same side in the vehicle width direction (in this embodiment, on the left side), which can shorten the harness.

<A layout of the ECU 71 and the battery 72> Both the ECU 71 and the battery 72 have a cuboid shape. Here, in this specification, the cuboid shape includes a configuration in which at least one corner is chamfered as well as a configuration in which six surfaces are accurate rectangles, a configuration in which opposing sides of a rectangle are parallel and substantially parallel (for example, including an error of 10° or less, or 20° or less), and a configuration in which each side of the rectangle is slightly curved rather than a straight line. In other words, it is sufficient to have a substantially box shape which can recognize a long side (longitudinal direction). Since both the ECU 71 and the battery 72 have the cuboid shape, they have the sides having three kinds of lengths (in a shorter length order, a short side, a middle side, and a long side). Two of these sides may have the same length (in this case, they have only the short side and the long side).

As shown in Fig. 3 and Fig. 5, the ECU 71 is inclinedly arranged so as to approach upward as its long side approaches the front. Therefore, in Fig. 5 (in a plan view), the long side of the ECU 71 is arranged along the front-back direction (so that the long side and the front-back direction are approximated). The ECU 71 has its arrangement angle of which the long side is closer to the front-back direction than the vertical direction (in other words, an acute angle that is formed by the horizontal direction and the long side is less than 45°). The short side of the ECU 71 is arranged along the vehicle width direction (so that the short side and the vehicle width direction are approximated).

The ECU 71 is inclinedly arranged as described above, which can reduce the arrangement space arranging in the front-back direction. Furthermore, in this embodiment, the connector 71b is extended from the lower long side, and the ECU harness 81 is arranged forward. Therefore, it is unnecessary to bend the ECU harness 81 too much. This can reduce the arrangement space in the vertical direction including the ECU harness 81. The load on the ECU harness 81 can be reduced.

As shown in Fig. 3 and Fig. 5, both in the side view and the plan view, the battery 72 is arranged with its long side along the front-back direction (such that the long side and the front-back direction are approximated). As shown in Fig. 5, the battery 72 is arranged with its short side along the vehicle width direction (such that the short side and the vehicle width direction are approximated).

As such, in the plan view, the ECU 71 and the battery 72 are arranged with their each long such that their each long side as the longest side is along the vehicle width direction.

As described above, the storage casing 60 is arranged in the space between the rear frame 13 and the rear stay 14 in the vehicle width direction. In the conventional layout in which a surface with the largest area of the ECU is vertically oriented, since the space for arranging the ECU in the vehicle width direction is widened, other members such as the battery cannot be arranged in the vehicle width direction. In this regard, in this embodiment, since the ECU 71 and the battery 72 are arranged with their each short side along the vehicle width direction, the size in the vehicle width direction is small. Therefore, even when the ECU 71 and the battery 72 are arranged side by side in the vehicle width direction (even when at least a part of positions of the ECU 71 and the battery 72 overlaps each other in the side view), the size in the vehicle width direction does not exceed a left-right space between the rear frame 13 in pairs on the left and right and a left-right space between the rear stay 14 in pairs on the left and right. Therefore, the ECU 71 and the battery 72 can be arranged in the storage casing 60 side by side in the vehicle width direction (that is, arranged in a region overlapping the rear frame 13 and the rear stay 14, in the side view). Accordingly, a large space can be secured in the front-back direction (particularly in the rear, in this embodiment).

Particularly in this embodiment, even in the narrow part 13a where the left-right space of the rear frame 13 is narrowed, the ECU 71 and the battery 72 can be arranged side by side in the vehicle width direction. Since the narrow part 13a has a purpose of shortening the distance in the vehicle width direction and improving the capability of putting the driver's foot on the ground, the narrow part 13a is formed in a range where the position of the narrow part 13a and the position of the front step 43 overlap each other in the front-back direction. Therefore, the narrow part 13a is positioned relatively forward under the seat. Since the ECU 71 and the battery 72 can be arranged in this relatively forward position, the center of gravity of the motorcycle 1 can be close to the seat on which the driver sits. This can improve a maneuverability of the motorcycle 1. In this embodiment, the narrow part 13a is formed in the range from the front step 43 to the rear step 45 and in the range overlapping the front seat 42, in the front-back direction.

The ECU 71 and the battery 72 have different size from each other in the vertical direction. Specifically, the size of the ECU 71 in the vertical direction is larger than the size of the battery 72 in the vertical direction. Therefore, as shown in Fig. 3 and Fig. 4, the storage casing 60 is configured that the position of the bottom surface on the ECU 71 side (left side) is lower than the position of the bottom surface on the battery 72 side (right side). Accordingly, there is a space under the battery 72. In this embodiment, the rear suspension 15 is arranged on this space. Therefore, the ECU 71 (especially the connector 71b), and the ECU harness 81 and rear suspension 15 overlap each other in the side view as shown in Fig. 3, and the battery 72 and rear suspension 15 overlap each other in the plan view as shown in Fig. 5.

Particularly in this embodiment, the rear suspension 15 is arranged along the front-back direction. More specifically, the arrangement angle of the rear step 45 is set such that the longitudinal direction is closer to the front-back direction than the vertical direction (in other words, the acute angle formed by the horizontal direction and the longitudinal direction is less than 45°). Therefore, the space under the battery 72 can be utilized more effectively.

<Devices arranged in the rear storage portion 60b> In this embodiment, since the ECU 71 and the battery 72 which are relatively large-sized devices, are arranged side by side in the vehicle width direction, a large space can be formed in the rear. Accordingly, a large number of devices can be arranged as described above. Specifically, the rear storage portion 60b of the storage casing 60 has, in order from the front, an on-board tool holder 75, a suspension actuator 76, a suspension control unit 77, and an ETC on-board unit (on-board communication device) 78. The positions of these members are restricted by the wall portion that is formed in the storage casing 60. These members are mounted via a bracket that is mounted to the storage casing 60.

The on-board tool holder 75 is a bag or box, etc. for putting tools for repairing and maintaining the motorcycle 1, such as wrenches, spanners and pliers.

The suspension actuator 76 is an actuator (more specifically, a hydraulic equipment) for adjusting an initial load of at least one of the rear suspension 15 and a front suspension (not shown). The initial load is also referred to as a preload. The initial load is the load that is pre-applied to the suspension (the load that is applied separately from the load of the driver). The suspension control unit 77 is configured by an arithmetic unit, etc. which controls the suspension actuator 76.

The ETC on-board unit 78 is a device for using an ETC (an abbreviation of Electronic Toll Collection, the registered trademark) system. The ETC system is a system which performs a payment procedure of a toll road fee in wireless communication. Specifically, an ETC card in which a user identification information etc. has stored is inserted, and thereby the ETC on-board unit 78 performs the wireless communication with an ETC gate (the gate which is provided at a toll gate of the toll road) by using such identification information. Accordingly, the payment procedure of the toll road fee is performed.

As described above, the motorcycle 1 includes the fuel tank 41, the front seat 42, the front step 43, the front wheel 22 and the rear wheel 25, the vehicle body frame 10, the ECU 71, and the battery 72. The driver sits on the front seat 42. The driver puts one's foot on the front step 43. The vehicle body frame 10 includes the main frame 12 and the rear frame 13, which are connected in the front-back direction. The vehicle body frame 10 extends in the front-back direction. The ECU 71 is supported by the vehicle body frame 10 and controls the engine 40. The battery 72 is supported by the vehicle body frame 10. The ECU 71 and the battery 72 are arranged side by side in the vehicle width direction. Both the ECU 71 and the battery 72 have a cuboid shape, and each of their short sides as the shortest side is arranged along the vehicle width direction.

Accordingly, each short side of the ECU 71 and the battery 72 is arranged along the vehicle width direction and supported by the vehicle body frame 10, and thereby the ECU 71 and the battery 72 can be arranged in the vehicle width direction while suppressing the size in the vehicle width direction. As a result, a relatively large space is easily secured in front of or rear of the ECU 71 and the battery 72 in the vehicle body frame 10.

In the motorcycle 1 of this embodiment, the ECU 71 and the battery 72 are arranged, in the side view, such that each of their long sides is closer to the front-back direction than the vertical direction.

Accordingly, since the size of the ECU 71 and the battery 72 in the vertical direction can be suppressed, the ECU 71 and the battery 72 can be easily arranged even in a place where the arrangement space in the vertical direction is limited.

In the motorcycle 1 of this embodiment, the long side of the ECU 71 is inclinedly arranged so as to approach upward as approaching the front. The connector 71b is arranged in the lower long side in the side view. The ECU harness 81 that is arranged in the connector 71b extends forward.

When the lower long side of the ECU 71 is not inclined up and down, it is necessary to largely bend the ECU harness 81, in order to forwardly extend the ECU harness 81 extending from the ECU 71. Therefore, the load is applied on the ECU harness 81, and the space that is occupied by the ECU harness 81 tends to be large. In this regard, the lower long side of the ECU 71 is inclined forward and upward as described above. Thereby, the load on the ECU harness 81 can be suppressed, and the space that is occupied by the ECU harness 81 tends to be small.

In the motorcycle 1 of this embodiment, the lower end of at least one connector 71b which connects the ECU 71 and the ECU harness 81 is arranged at a position lower than the upper end of the front wheel 22 and the upper end of the rear wheel 25.

Accordingly, the connector 71b of the ECU 71 can be arranged by utilizing the space between the front wheel 22 and the rear wheel 25.

In the motorcycle 1 of this embodiment, the following configuration is provided. That is, the motorcycle 1 includes the rear suspension 15 for reducing vibration transmitted from the rear wheel 25 to the vehicle body frame 10. The rear suspension 15 is arranged under the battery 72, at a position overlapping the battery 72 in the plan view, and at a position overlapping the ECU 71 in the side view. The rear suspension 15 is arranged such that the longitudinal direction is closer to the front-back direction than the vertical direction, in the side view.

Accordingly, the rear suspension 15 can be arranged by effectively utilizing the space formed by the size difference between the battery 72 and the ECU 71 in the vertical direction. In particular, since the longitudinal direction of the rear suspension 15 is close to the front-back direction, the above-described space can be further effectively utilized.

In the motorcycle 1 of this embodiment, the rear frame 13 that is arranged in pairs on the left and right has the narrow part 13a where a space between the left and right is narrowed in the vicinity of the front seat 42. The ECU 71 and the battery 72 are arranged between the left and right rear frames 13 in the narrow part 13a.

Accordingly, since the space between the rear frames 13 is widened in front of or rear of the ECU 71 and the battery 72, a wider space can be secured.

In the motorcycle 1 of this embodiment, the following configuration is provided. That is, the front seat 42 is arranged so as to be adjacent to the rear side of the fuel tank 41. The front step 43 is arranged below the fuel tank 41 or the front seat 42. The positions of the narrow part 13a and the front step 43 overlap each other in the front-back direction.

Accordingly, the ECU 71 and the battery 72 are arranged relatively forward, and thereby the center of gravity of the motorcycle 1 can be close to the front seat 42 on which the driver sits. This can improve the motor performance of the motorcycle 1. In particular, in the present invention, since the left-right width (the left-right width of the narrow part) of the arrangement position of the ECU 71 and the battery 72 can be small, a configuration in which the driver easily puts one's fe on the ground can be realized.

The motorcycle 1 of this embodiment includes the rear stay 14 that is arranged below the rear frame 13. The space between the rear frame 13 and the rear stay 14 in the vertical direction decreases as approaching the rear side. In the side view, the ECU 71 and the battery 72 overlap both the rear frame 13 and the rear stay 14.

Accordingly, in the present invention, since each size of the ECU 71 and the battery 72 in the vehicle width direction can be suppressed, the ECU 71 and the battery 72 can be arranged side by side in the vehicle width direction even in the space that is surrounded on the left and right by the rear frame 13 and the rear stay 14 as described above.

In the motorcycle 1 of this embodiment, at least any one of the relay box 74, the suspension actuator 76 for adjusting the initial load of the rear suspension 15, the suspension control unit 77 for controlling the suspension actuator 76, and the ETC on-board unit 78 is arranged in the rear of the ECU 71 and the battery 72.

Accordingly, the relatively large electrical components can be arranged by utilizing the space in the rear of the ECU 71 and the battery 72.

Although a preferred embodiment of the present invention has been described above, the above-described configuration can be modified, for example, as follows.

<Arrangement of the ECU and the battery> The layout of the ECU 71 and the battery 72 shown in the above-described embodiment is merely an example. This can be modified as follows, for example. That is, in the above-described embodiment, although the ECU 71 is arranged on the left side (the main harness 80 side) and the battery 72 is arranged on the right side, the ECU 71 may be arranged on the right side and the battery 72 may be arranged on the left side.

<Other devices arranged in the rear of the ECU and the battery> In the above-described embodiment, although the relay box 74, the on-board tool holder 75, the suspension actuator 76, the suspension control unit 77, and the ETC on-board unit 78 are arranged in the rear space of the ECU 71 and the battery 72, at least one of them may be excluded or the other devices other than them may be arranged. Other devices may be electrical components such as a regulator, a fuse box, an ABS control unit, CDI (Capacitor Discharged Ignition), TCS (Traction Control System), etc. Non-electrical components such as a canister may be also arranged.

<The rear seat and the rear step> Although the motorcycle 1 of the above-described embodiment includes the rear seat 44 and the rear step 45 on which the passenger ride, the motorcycle 1 may not include the rear seat 44 and the rear step 45.

<Applicability of the present invention> In the above-described embodiment, although an example in which a tourer type motorcycle is applied to the present invention, the present invention can be also applied to other motorcycles (a naked type, a motocross type, a supersport type or a cruise type, etc).

### DESCRIPTION OF THE REFERENCE NUMERALS

- 1: motorcycle
- 22: front wheel
- 25: rear wheel
- 41: fuel tank
- 42: front seat (seat)
- 43: front step (step)
- 60: storage casing
- 61: mounting bracket
- 62: battery holding part
- 71: ECU
- 72: battery

## Claims

1. A motorcycle (1) comprising:
a fuel tank (41);
a seat (42) on which a driver sits;
a step (43) on which the driver puts one's own foot;
a front wheel (22) and a rear wheel (25);
a vehicle body frame including a main frame and a rear frame, which are connected in a front-back direction, the vehicle body frame which extends in the front-back direction;
an ECU (71) that is supported by the vehicle body frame, the ECU (71) which controls an engine; and
a battery (72) that is supported by the vehicle body frame; wherein
the ECU (71) and the battery (72) are arranged side by side in a vehicle width direction, both the ECU (71) and the battery (72) have a cuboid shape, and each of their short sides as the shortest side is arranged along the vehicle width direction, wherein
in a side view, the ECU (71) and the battery (72) are arranged such that each of long sides as the longest side is closer to the front-back direction than a vertical direction, **characterized in that**, the long side of the ECU (71) is inclinedly arranged so as to approach upward as approaching the front,
a connector is arranged in the lower long side of the ECU (71) in the side view,
an ECU harness that is connected to the connector extends forward,
and wherein
a lower end of at least one connector which connects the ECU (71) and the ECU harness is arranged at a position lower than an upper end of the front wheel (22) and the upper end of the rear wheel (25).

2. The motorcycle (1) according to any one of claims 1, wherein
a rear suspension for reducing vibration transmitted from the rear wheel (25) to the vehicle body frame is included,
the rear suspension is arranged below the battery (72), arranged at a position overlapping the battery (72) in a plan view, and arranged at a position overlapping the ECU (71) in the side view,
the rear suspension is arranged such that a longitudinal direction is closer to the front-back direction than the vertical direction, in a side view.

3. The motorcycle (1) according to claim 1 or 2, wherein
the rear frame that is arranged in pairs on the left and right has a narrow part where a space between the left and right is narrowed in the vicinity of the seat (42),
the ECU (71) and the battery (72) are arranged between the left and right rear frames in the narrow part.

4. The motorcycle (1) according to claim 3, wherein
the seat (42) is arranged so as to be adjacent to a rear side of the fuel tank (41),
the step (43) is arranged below the fuel tank (41) or the seat (42),
positions of the narrow part and the front step (43) overlap each other in the front-back direction.

5. The motorcycle (1) according to any one of claims 1 to 4, wherein
a rear stay extending in the front-back direction is arranged below the rear frame,
a space between the rear frame and the rear stay in the vertical direction is narrowed as approaching the rear side,
in the side view, the ECU (71) and the battery (72) overlap both the rear frame and the rear stay.

6. The motorcycle (1) according to any one of claims 1 to 5, wherein
at least any one of a relay box, an actuator for adjusting an initial load of a suspension, a control unit of the actuator, and an on-board communication device which performs wireless communication for a payment of a toll road fee is arranged in the rear of the ECU (71) and the battery (72).

## Patentansprüche

1. Kraftrad umfassend
einen Kraftstoffbehälter (41),
einen Sitz (42), auf dem der Fahrer sitzt,
einen Fußtritt (43), auf den der Fahrer seinen eigenen Fuß setzt,
ein Vorderrad (22) und ein Hinterrad (25),
einen Karosserierahmen umfassend einen Hauptrahmen und einen hinteren Rahmen, die in einer Vorderseite-Hinterseite-Richtung verbunden sind, wobei sich der Karosserierahmen in die Vorderseite-Hinterseite-Richtung erstreckt,
ein Motorsteuergerät (71), das von dem Karosserierahmen getragen wird, wobei das Motorsteuergerät (71) einen Motor steuert, und
eine Batterie (72), die von dem Karosserierahmen getragen wird,
wobei
das Motorsteuergerät (71) und die Batterie (72) in einer Fahrzeugbreitenrichtung nebeneinander angeordnet sind,
sowohl das Motorsteuergerät (71) als auch die Batterie (72) eine quaderförmige Form aufweisen und jede ihrer kurzen Seiten als die kürzeste Seite entlang der Fahrzeugbreitendrichtung angeordnet ist,
wobei in einer Seitenansicht das Motorsteuergerät (71) und die Batterie (72) derart angeordnet sind, dass jede der langen Seiten als längste Seite näher an der Vorderseite-Hinterseite-Richtung als an einer vertikalen Richtung ist,
**dadurch gekennzeichnet, dass**
die lange Seite des Motorsteuergeräts (71) schräg angeordnet ist, so dass sie sich oben nähert, wenn man sich der Vorderseite nähert,
ein Verbinder in der in der Seitenansicht unteren langen Seite des Motorsteuergeräts (71) angeordnet ist,
ein Motorsteuergerätkabelbaum, der mit dem Verbinder verbunden ist, sich nach vorne erstreckt,
und wobei
ein unteres Ende mindestens eines Verbinders, der das Steuergerät (71) und den Motorsteuergerätkabelbaum verbindet, an einer Position unterhalb eines oberen Endes des Vorderrads (22) und des oberen Endes des Hinterrads (25) angeordnet ist.

2. Kraftrad (1) nach einem der Ansprüche 1, wobei
eine hintere Aufhängung zum Verringern von Vibration, die von dem Hinterrad (25) zu dem Karosserierahmen übertragen wird, mitumfasst ist,
wobei die hintere Aufhängung unterhalb der Batterie (72) angeordnet ist, an einer Position angeordnet ist, in der sie in einer Draufsicht sich mit der Batterie (72) überlappt, und an einer Position angeordnet ist, in der sie in der Seitenansicht sich mit dem Motorsteuergerät (71) überlappt,
wobei die hintere Aufhängung derart angeordnet ist, dass in einer Seitenansicht eine Längsrichtung näher zu der Vorderseite-Hinterseite-Richtung als zu der vertikalen Richtung ist.

3. Kraftrad (1) nach Anspruch 1 oder 2, wobei
der hintere Rahmen, der in Paaren auf der linken und der rechten Seite angeordnet ist, einen verjüngten Teil da aufweist, wo ein Abstand zwischen der linken und der rechten Seite in der Nähe des Sitzes (42) verjüngt ist,
wobei das Motorsteuergerät (71) und die Batterie (72) zwischen den linken und den rechten hinteren Rahmen in dem verjüngten Teil angeordnet sind.

4. Kraftrad (1) nach Anspruch 3, wobei
der Sitz (42) so arrangiert ist, dass er an eine hintere Seite des Kraftstofftanks (41) angrenzt, wobei der Fußtritt (43) unterhalb des Kraftstofftanks (41) oder des Sitzes (42) angeordnet ist, wobei Positionen des verjüngten Teils und des vorderen Fußtritts (43) sich einander in der Vorderseite-Hinterseite-Richtung überlappen.

5. Kraftrad (1) nach einem der Ansprüche 1 bis 4, wobei
eine hintere Stütze, die sich in die Vorderseite-Hinterseite-Richtung erstreckt, unterhalb des hinteren Rahmens angeordnet ist,
ein Abstand zwischen dem hinteren Rahmen und der hinteren Stütze sich in die vertikale Richtung verjüngt, wenn man sich der hinteren Seite nähert, und
in der Seitenansicht das Motorsteuergerät (71) und die Batterie (72) sowohl den hinteren Rahmen als auch die hintere Stütze überlappen.

6. Kraftrad (1) nach einem der Ansprüche 1 bis 5, wobei
eine Relaisbox, ein Aktuator zum Einstellen einer initialen Last einer Aufhängung, eine Steuerungseinheit des Aktuators und/oder eine on-Board-Kommunikationsvorrichtung, die drahtlose Kommunikation für eine Bezahlung einer Gebühr für eine gebührenpflichtige Straße durchführt, hinter dem Motorsteuergerät (71) und der Batterie (72) angeordnet ist.

## Revendications

1. Motocyclette (1) comprenant :
un réservoir de carburant (41);
un siège (42) sur lequel s'assied un conducteur ;
un repose-pied (43) sur lequel le conducteur pose son pied ;
une roue avant (22) et une roue arrière (25) ;
un châssis de carrosserie de véhicule comportant un châssis principal et un châssis arrière qui sont reliés dans une direction avant-arrière, lequel châssis de carrosserie de véhicule s'étend dans la direction avant-arrière ;
une unité UCE (71) qui est supportée par le châssis de carrosserie de véhicule, laquelle unité UCE (71) commande un moteur ; et
une batterie (72) qui est supportée par le châssis de carrosserie de véhicule ; dans laquelle :
l'unité UCE (71) et la batterie (72) sont disposées côte à côte dans une direction de largeur du véhicule,
l'unité UCE (71) et la batterie (72) sont toutes deux de forme parallélépipédique, et chacun de leurs côtés courts en tant que côté le plus court est disposé dans le sens de la largeur du véhicule, dans laquelle :
sur une vue de côté, l'unité UCE (71) et la batterie (72) sont disposées de manière que chacun des côtés longs en tant que côté le plus long soit plus proche de la direction avant-arrière que d'une direction verticale,
**caractérisée en ce que** :
le côté long de l'unité UCE (71) est disposé obliquement de manière à tendre vers le haut à mesure qu'il se rapproche de l'avant,
un connecteur est disposé sur le côté long inférieur de l'unité UCE (71) sur la vue de côté,
un faisceau d'unité UCE qui est connecté au connecteur s'étend vers l'avant, et dans laquelle :
une extrémité inférieure d'au moins un connecteur qui connecte l'unité UCE (71) et le harnais d'unité UCE est disposée à une position plus basse qu'une extrémité supérieure de la roue avant (22) et que l'extrémité supérieure de la roue arrière (25).

2. Motocyclette (1) selon la revendication 1, dans laquelle :
est incluse une suspension arrière permettant de réduire les vibrations transmises depuis la roue arrière (25) au châssis de carrosserie de véhicule,
la suspension arrière est disposée en dessous de la batterie (72), disposée à une position chevauchant la batterie (72) sur une vue en plan, et disposée à une position chevauchant l'unité UCE (71) sur la vue de côté,
la suspension arrière est disposée de manière qu'une direction longitudinale soit plus proche de la direction avant-arrière que de la direction verticale, sur une vue de côté.

3. Motocyclette (1) selon la revendication 1 ou 2, dans laquelle :
le châssis arrière qui est disposé en une paire sur la gauche et sur la droite comporte une partie étroite où un espace entre la gauche et la droite se rétrécit au voisinage du siège (42),
l'unité UCE (71) et la batterie (72) sont disposées entre les châssis arrière gauche et droit dans la partie étroite.

4. Motocyclette (1) selon la revendication 3, dans laquelle :
le siège (42) est disposé de manière à être adjacent à un côté arrière du réservoir de carburant (41),
le repose-pied (43) est disposé en dessous du réservoir de carburant (41) ou du siège (42),
les positions de la partie étroite et du repose-pied avant (43) se chevauchent l'une l'autre dans la direction avant-arrière.

5. Motocyclette (1) selon l'une quelconque des revendications 1 à 4, dans laquelle :
un hauban arrière s'étendant dans la direction avant-arrière est disposé en dessous du châssis arrière, un espace entre le châssis arrière et le hauban arrière dans la direction verticale se rétrécit à mesure qu'il se rapproche du côté arrière,
sur la vue de côté, l'unité UCE (71) et la batterie (72) chevauchent à la fois le châssis arrière et le hauban arrière.

6. Motocyclette (1) selon l'une quelconque des revendications 1 à 5, dans laquelle :
au moins l'un(e) quelconque parmi une boîte à relais, un actionneur destiné à régler une charge initiale de suspension, une unité de commande de l'actionneur et un dispositif de communication embarqué qui assure la communication sans fil aux fins du paiement d'un péage d'autoroute payante est disposé(e) à l'arrière de l'unité UCE (71) et de la batterie (72).
